# EUROPEAN PATENT APPLICATION

(11) **EP 4 826 457 A1**
(43) Date of publication of application: **21.10.2026**
(21) Application number: 26171429.9
(22) Date of filing: 09.04.2026
(51) Int. Cl.: G03G 15/00, G03G 15/16

(54) **IMAGE FORMING APPARATUS**

(30) Priority: 14.04.2025 JP 2025066008
(71) Applicant: KYOCERA Document Solutions Inc., Osaka-shi, Osaka 540-8585 (JP)
(72) Inventor: SUEISHI, Naoki, Osaka, 540-8585 (JP)
(74) Representative: Winter, Brandl - Partnerschaft mbB

(57) **Abstract**

An image forming apparatus (10) includes a first high-voltage power supply circuit (11), and a second high-voltage power supply circuit (12). The first high-voltage power supply circuit includes a first step-up transformer (T1). The second high-voltage power supply circuit includes a second step-up transformer. Further, the first high-voltage power supply circuit comprises a self-excited oscillation circuit (31) that includes a primary winding (21) of the first step-up transformer, a rectifier smoothing circuit (32) connected to a secondary winding (22) of the first step-up transformer, and an operation frequency adjusting circuit (33) connected to a tertiary winding (23) of the first step-up transformer. The operation frequency adjusting circuit sets an operation frequency of the first step-up transformer such that the operation frequency of the first step-up transformer is different from an operation frequency of the second step-up transformer.

## Description

### BACKGROUND

### 1. FIELD OF THE PRESENT INVENTION

The present invention relates to an image forming apparatus.

### 2. DESCRIPTION OF THE RELATED ART

A high voltage power supply apparatus boosts voltage with a piezoelectric transformer, rectifies and smoothes a secondary voltage of the piezoelectric transformer with a rectifier smoothing circuit connected to a secondary side of the piezoelectric transformer, and thereby generates a high voltage output; and further, a variable resonance frequency circuit is connected to the secondary side of the piezoelectric transformer; and for plural piezoelectric transformers of plural high voltage outputs, variable resonance frequency circuits set resonance frequencies different from each other and thereby, mutual interference between the plural piezoelectric transformers is restrained.

Further, in an image forming apparatus, transfer bias is applied to a secondary transfer roller for a secondary transfer of a toner image from an intermediate transfer belt to a print sheet, separation bias is applied to a separation needle as a reverse potential to the transfer bias in order to separate the print sheet from the intermediate transfer belt.

In the aforementioned high voltage power supply apparatus, the variable resonance frequency circuits with different resonance frequencies are connected to the plural piezoelectric transformers, and therefore, among the plural high voltage outputs, characteristics of rising and/or falling of the high voltages do not agree with each other in load sides, and consequently, the load may not properly operate.

### SUMMARY

An image forming apparatus according to the present invention includes a first high-voltage power supply circuit, and a second high-voltage power supply circuit. The first high-voltage power supply circuit includes a first step-up transformer. The second high-voltage power supply circuit includes a second step-up transformer. Further, the first high-voltage power supply circuit includes a self-excited oscillation circuit that includes a primary winding of the first step-up transformer, a rectifier smoothing circuit connected to a secondary winding of the first step-up transformer, and an operation frequency adjusting circuit connected to a tertiary winding of the first step-up transformer. The operation frequency adjusting circuit sets an operation frequency of the first step-up transformer such that the operation frequency of the first step-up transformer is different from an operation frequency of the second step-up transformer.

These and other objects, features and advantages of the present invention will become more apparent upon reading of the following detailed description along with the accompanied drawings.

### BRIEF DESCRIPTION OF THE DRAWINGS

Fig. 1 shows a block diagram that indicates a configuration of an image forming apparatus 10 according to an embodiment of the present invention;
Fig. 2 shows a circuit diagram that indicates an example of a high-voltage power supply circuit 11 in Fig. 1; and
Fig. 3 shows a timing chart that explains high voltage outputs of high-voltage power supply circuits 11 and 12 in Fig. 1.

### DETAILED DESCRIPTION

Hereinafter, an embodiment according to an aspect of the present invention will be explained with reference to drawings.

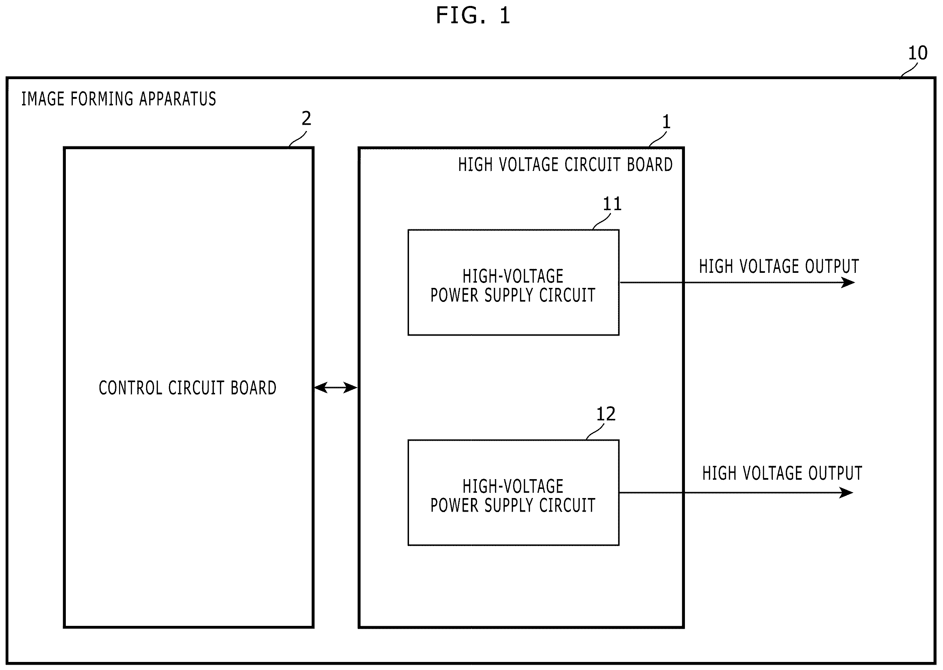

Fig. 1 shows a block diagram that indicates a configuration of an image forming apparatus 10 according to an embodiment of the present invention. The image forming apparatus 10 shown in Fig. 1 is an electrophotographic image forming apparatus (printer, multi function peripheral or the like), and includes a photoconductor drum, a charging roller that changes the photoconductor drum, a development roller that attaches toner to an electrostatic latent image on a surface of the photoconductor drum, a primary transfer roller for primary transfer of a toner image from the photoconductor drum to an intermediate transfer belt, a secondary transfer roller for secondary transfer of a toner image from the intermediate transfer belt to a print sheet, a separation needle to separate the print sheet from the intermediate transfer belt, and the like.

For plural high voltage units (i.e. loads) that includes the development roller, the charging roller, the primary transfer roller, the secondary transfer roller, the separation needle and the like, applying respective individual high voltages is required. Therefore, the image forming apparatus 10 shown in Fig. 1 includes a high voltage circuit board 1 that applies predetermined high voltages to such high voltage units used in an electrophotographic development process, and a control circuit board 2 that controls the high voltage circuit board 1.

The high voltage circuit board 1 includes high-voltage power supply circuits 11 and 12 for respective loads, and the high-voltage power supply circuits 11 and 12 supply power with voltages and currents corresponding to the respective loads. Thus, the high-voltage power supply circuits 11 and 12 are installed on the single high voltage circuit board 1.

In this embodiment, the high-voltage power supply circuit 12 applies transfer bias to the secondary transfer roller for secondary transfer of a toner image from an intermediate transfer belt to a print sheet. The high-voltage power supply circuit 11 applies separation bias to the separation needle in order to separate the print sheet from the intermediate transfer belt.

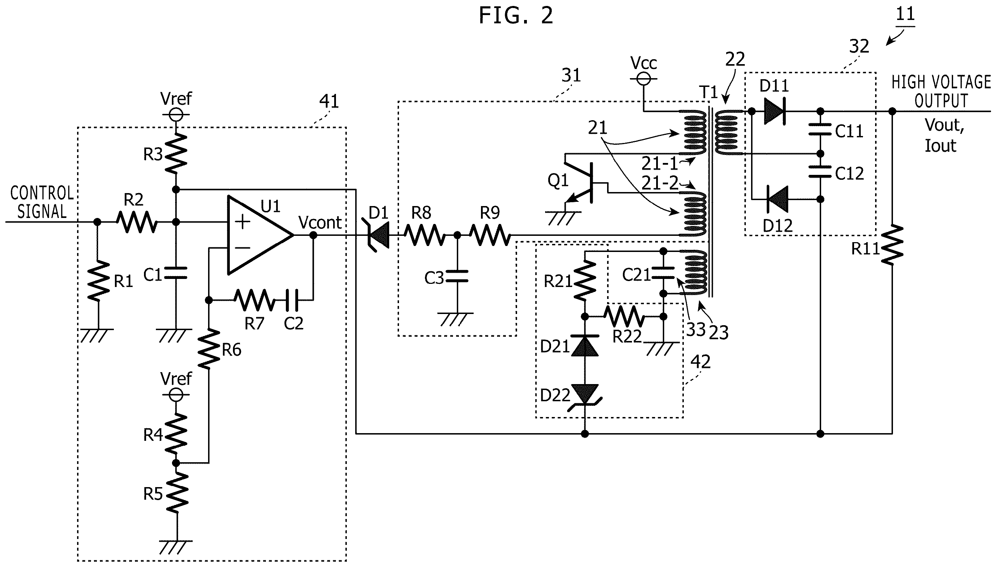

Fig. 2 shows a circuit diagram that indicates an example of a high-voltage power supply circuit 11 in Fig. 1.

The high-voltage power supply circuit 11 shown in Fig. 2 includes a step-up transformer T1, a self-excited oscillation circuit 31 that includes a primary winding 21 of the step-up transformer T1, a rectifier smoothing circuit 32 connected to a secondary winding 22 of the step-up transformer T1, and an operation frequency adjusting circuit 33 connected to a tertiary winding 23 of the step-up transformer T1. The rectifier smoothing circuit 32 performs power outputting with either a constant current or a constant voltage to a predetermined load.

Here, the operation frequency adjusting circuit 33 sets an operation frequency of the step-up transformer T1 in this high-voltage power supply circuit 11 such that the operation frequency of the step-up transformer T1 is different from an operation frequency of the step-up transformer in the other high-voltage power supply circuit 12. Here, the operation frequency adjusting circuit 33 includes a capacitor C21 connected to the tertiary winding 23 of the step-up transformer T1.

Further, in this embodiment, the high-voltage power supply circuit 11 further includes a control circuit 41 and a no-load voltage setting circuit 42. The control circuit 41 controls the self-excited oscillation circuit 31 in accordance with a control signal from the control circuit board 2 or the like.

The no-load voltage setting circuit 42 sets an output voltage of this high-voltage power supply circuit 11 in a status that there are substantially no loads.

Here, the control circuit 41 includes an operational amplifier U1, resistances R1 to R7, and capacitors C1 and C2; amplifies a level of the control signal with an amplification factor corresponding to values of the resistances R1 to R7 and thereby, generates a control voltage Vcont, and applies the control voltage Vcont to the self-excited oscillation circuit 31. A series circuit of the resistances R1 to R3 forms a voltage divider circuit between a power supply Vref (here, 3 Volt) and a ground, and a series circuit of the resistances R4 and R5 forms a voltage divider circuit between the power supply Vref (here, 3 Volt) and the ground. The capacitors C1 and C2 are capacitors for noise elimination. Further, a Zener diode D1 is arranged such that the self-excited oscillation circuit 31 is prevented from malfunction even if the control voltage Vcont slightly shifts from 0 Volt when the control signal is 0 Volt.

The self-excited oscillation circuit 31 includes the primary winding 21 of the step-up transformer T1, a transistor Q1, resistances R8 and R9, and a capacitor C3; and if the capacitor C3 is charged through the resistance R8 and a both-end voltage of the capacitor C3 exceeds a predetermined value, then the transistor Q1 is turned on, and if the transistor Q1 is turned on, then current flows through a primary winding 21-1, and voltage is induced on a primary winding 21-2 that makes electromagnetic coupling with the primary winding 21-1 and current also flows through the primary winding 21-2, and thereby, the transistor Q1 is turned off. This operation is repeatedly performed, and thereby, with a specific operation frequency, the self-excited oscillation circuit 31 oscillates and the step-up transformer T1 operates with this operation frequency. Meanwhile, the operation frequency adjusting circuit 33 is connected to the tertiary winding 23 that makes electromagnetic coupling with the primary winding 21, and therefore, the aforementioned operation frequency is changed because a phase of the current that flows the primary winding 21 is shifted in accordance with an impedance characteristic of the operation frequency adjusting circuit 33. Here, the primary winding 21 of the step-up transformer T1 is connected to a power supply Vcc of a 24 Volt system.

Further, the rectifier smoothing circuit 32 includes diodes D11 and D12 as a rectifier circuit and capacitors C11 and C12 as a smoothing circuit; and rectifies and smoothes a voltage induced on the secondary winding 22 of the step-up transformer T1 and thereby outputs electric power.

Here, the control circuit 41 controls the self-excited oscillation circuit 31 such that the rectifier smoothing circuit 32 performs a constant current output to the load. Specifically, the control circuit 41 detects an output voltage Vout through a resistance R11 and changes the control voltage Vcont correspondingly to the output voltage Vout, and thereby causes a constant current to flow though the load. Further, here, the rectifier smoothing circuit 32 in the high-voltage power supply circuit 11 is electrically connected to the separation needles, and the aforementioned load is a print sheet that passes at a position of the separation needles, and when there is not the print sheet at the position of the separation needles, output of the high-voltage power supply circuit 11 becomes in a no-load status.

Furthermore, the no-load voltage setting circuit 42 includes resistances R21 and R22, a diode D21, and a Zener diode D22. In the no-load status, an output current Iout does not flow substantially and thereby the output voltage Vout increases, but the output voltage Vout is clamped at a voltage corresponding to the resistances R21 and R22, the diode D21 and the Zener diode D22 on the basis of a voltage induced on the tertiary winding 23.

It should be noted that a configuration of the high-voltage power supply circuit 12 is the same as the configuration of the high-voltage power supply circuit 11. However, impedance values of the operation frequency adjusting circuits 33 (here, capacitance values of the capacitors C21) are different from each other. Therefore, an operation of the step-up transformer T1 in the high-voltage power supply circuit 12 is different from an operation of the step-up transformer T1 in the high-voltage power supply circuit 11, and the mutual interference does not appear easily even if the step-up transformers T1 in the high-voltage power supply circuits 11 and 12 are close to each other.

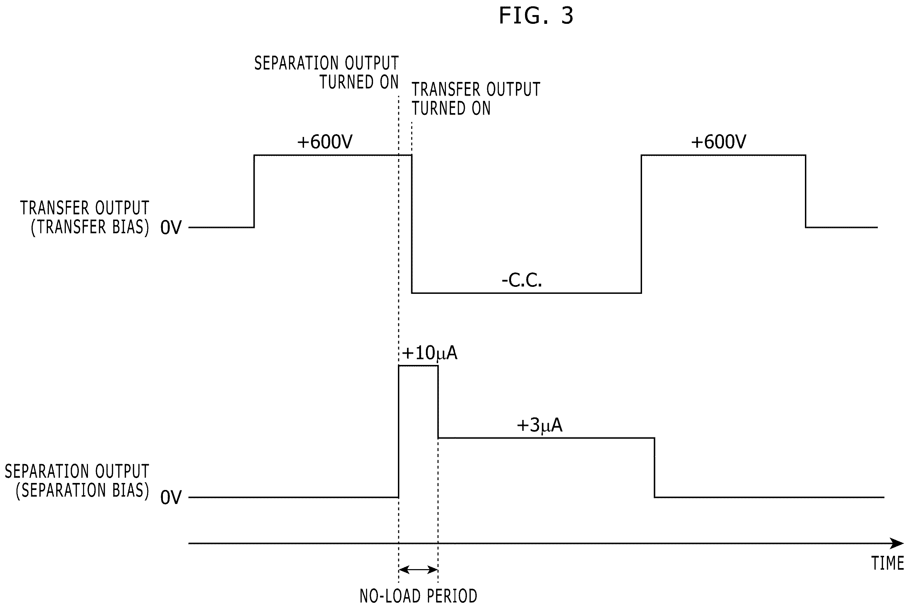

Fig. 3 shows a timing chart that explains high voltage outputs of high-voltage power supply circuits 11 and 12 in Fig. 1. As shown in Fig. 3 for example, turning on-and-off timings of outputs (transfer output and separation output) of the high-voltage power supply circuits 11 and 12 are different from each other, but because of the different operation frequencies as mentioned, the mutual interference does not appear easily even if the step-up transformers T1 in the high-voltage power supply circuits 11 and 12 are close to each other on the high voltage circuit board 1.

The following part explains a behavior of the image forming apparatus 10.

In the image forming apparatus 10, a controller or the like on the control circuit board 2 provides the aforementioned control signals to the high-voltage power supply circuits 11 and 12 on the high voltage circuit board 1, respectively. The control signal specifies on/off statuses of the outputs, output current values and/or the like of the high-voltage power supply circuits 11 and 12, correspondingly to a level of the control signal.

In the high-voltage power supply circuit 11 or 12, the control circuit 41 applies to the self-excited oscillation circuit 31 the control voltage Vcont corresponding to a level of the control signal, and the self-excited oscillation circuit 31 oscillates with the operation frequency corresponding to the operation frequency adjusting circuit 33 (capacitor C21) connected to the tertiary winding 23; and thereby voltage with the operation frequency is induced on the secondary winding 22 and a direct-current electric power is outputted through the rectifier smoothing circuit 32. Here, the step-up transformers T1 in the high-voltage power supply circuits 11 and 12 are the same as each other, but the impedance values of the operation frequency adjusting circuits 33 (here, capacitance values of the capacitors C21) in the high-voltage power supply circuits 11 and 12 are different from each other. Therefore, the step-up transformers T1 in the high-voltage power supply circuits 11 and 12 operate with the different operation frequencies and induce stepped-up voltages with the operation frequencies on the secondary windings 22.

Here, as shown in Fig. 3 for example, the high-voltage power supply circuit 11 provides separation bias as constant current output to the separation needle and the high-voltage power supply circuit 12 provides transfer bias to the secondary transfer roller. If the image forming apparatus 10 is a monochrome image forming apparatus, as shown in Fig. 3 for example, the separation output is started in a no-load status (i.e. before the print sheet reaches the separation needle), and thereafter, the transfer output is started, and when a front end of the print sheet reaches the separation needle, the separation output becomes in an on-load status.

As mentioned, in the aforementioned embodiment, the high-voltage power supply circuits 11 and 12 include step-up transformers, respectively. The high-voltage power supply circuit 11 or 12 includes a self-excited oscillation circuit 31 that includes a primary winding 21 of the step-up transformer T1, a rectifier smoothing circuit 32 connected to a secondary winding 22 of the step-up transformer T1, and an operation frequency adjusting circuit 33 connected to a tertiary winding 23 of the step-up transformer T1. The operation frequency adjusting circuit 33 in one of the high-voltage power supply circuits 11 and 12 sets an operation frequency of the step-up transformer T1 in this high-voltage power supply circuit 11 such that the operation frequency of the step-up transformer T1 is different from an operation frequency of the step-up transformer in the other of the high-voltage power supply circuits 11 and 12.

Consequently, mutual interference between transformers for plural high voltage outputs (here, the step-up transformers T1) is restrained, and therewith, influence to characteristics of rising and/or falling of the high voltage outputs in load sides is restrained. In particular, even if the high-voltage power supply circuits 11 and 12 are installed on a single circuit board (here, the high voltage circuit board 1) and are close to each other, mutual interference does not appear easily. Further, in a color image forming apparatus, the high-voltage power supply circuits 11 and 12 are installed for each of toner colors (e.g. Cyan, Magenta, Yellow, and Black). In such a case, impedances of circuits connected to the secondary windings 22 (here, the rectifier smoothing circuit 32) are the same among the toner colors, and therefore, among the toner colors, deviation is restrained on characteristics of rising and/or falling of the high voltage output in the loads.

It should be understood that various changes and modifications to the embodiments described herein will be apparent to those skilled in the art. Such changes and modifications may be made without departing from the spirit and scope of the present subject matter and without diminishing its intended advantages. It is therefore intended that such changes and modifications be covered by the appended claims.

## Claims

1. An image forming apparatus (10), comprising:
a first high-voltage power supply circuit (11) that comprises a first step-up transformer (T1); and
a second high-voltage power supply circuit (12) that comprises a second step-up transformer;
wherein the first high-voltage power supply circuit (11) comprises a self-excited oscillation circuit (31) that includes a primary winding (21) of the first step-up transformer (T1), a rectifier smoothing circuit (32) connected to a secondary winding (22) of the first step-up transformer (T1), and an operation frequency adjusting circuit (33) connected to a tertiary winding (23) of the first step-up transformer (T1); and
the operation frequency adjusting circuit (33) sets an operation frequency of the first step-up transformer (T1) such that the operation frequency of the first step-up transformer (T1) is different from an operation frequency of the second step-up transformer.

2. The image forming apparatus (10) according to claim 1, further comprising:
a control circuit (41) configured to control the self-excited oscillation circuit (31) in accordance with a control signal; and
a no-load voltage setting circuit (42);
wherein the rectifier smoothing circuit (22) performs power outputting to a predetermined load;
the control circuit (41) controls the self-excited oscillation circuit (31) such that the rectifier smoothing circuit (22) performs a constant current output to the load; and
the no-load voltage setting circuit (42) sets an output voltage of the first high-voltage power supply circuit (11) in a status that there is not the load.

3. The image forming apparatus (10) according to claim 1, further comprising:
an intermediate transfer belt;
a secondary transfer roller; and
a separation needle;
wherein the second high-voltage power supply circuit (12) applies transfer bias to the secondary transfer roller for secondary transfer of a toner image from the intermediate transfer belt to a print sheet; and
the first high-voltage power supply circuit (11) applies separation bias to the separation needle in order to separate the print sheet from the intermediate transfer belt.

4. The image forming apparatus (10) according to claim 1, wherein the operation frequency adjusting circuit (42) comprises a capacitor (C21) connected to the tertiary winding (23) of the first step-up transformer (T1).

5. The image forming apparatus (10) according to claim 1, wherein the first high-voltage power supply circuit (11) and the second high-voltage power supply circuit (12) are installed on a single circuit board (1).
